# EUROPÄISCHE PATENTSCHRIFT

(11) **EP 4 031 315 B1**
(45) Veröffentlichungstag und Bekanntmachung des Hinweises auf die Patenterteilung: **27.09.2023**
(21) Anmeldenummer: 20800645.2
(22) Anmeldetag: 03.11.2020
(51) Int. Cl.: B23K 26/0622, B23K 26/06, B23K 26/364, B23K 26/382, B23K 26/53, C03B 33/09

(54) **LASERSCHNEIDVERFAHREN UND ZUGEHÖRIGE LASERSCHNEIDVORRICHTUNG**
LASER CUTTING METHOD AND ASSOCIATED LASER CUTTING DEVICE
PROCÉDÉ DE DÉCOUPE AU LASER ET DISPOSITIF DE DÉCOUPE AU LASER ASSOCIÉ

(30) Priorität: 05.11.2019 DE 102019217021
(43) Veröffentlichungstag der Anmeldung: 27.07.2022
(73) Patentinhaber: Photon Energy GmbH, 91242 Ottensoos (DE)
(72) Erfinder: AMLER, Hans, 91207 Lauf a. d. Pegnitz (DE); POLUSHKIN, Sergey, 91242 Ottensoos (DE)
(74) Vertreter: FDST Patentanwälte
(86) Internationale Anmeldenummer: PCT/EP2020/080823
(87) Internationale Veröffentlichungsnummer: WO 2021/089546

(56) Entgegenhaltungen:
- WO-A1-2017/025550
- DE-A1-102015 116 846
- DE-A1-102015 120 950
- FARID AHMED ET AL: "Display glass cutting by femtosecond laser induced single shot periodic void array", APPLIED PHYSICS A; MATERIALS SCIENCE & PROCESSING, SPRINGER, BERLIN, DE, Bd. 93, Nr. 1, 3. Juni 2008 (2008-06-03), Seiten 189-192, XP019626882, ISSN: 1432-0630

## Beschreibung

Die Erfindung bezieht sich auf Laserschneidverfahren zum Schneiden von plattenförmigen Material nach dem Oberbegriff des Anspruchs 1 sowie auf eine zugehörigen Laserschneidvorrichtung.

Ein Verfahren zum Schneiden von plattenförmigen Material nach dem Oberbegriff des Anspruchs 1 ist aus DE 10 2015 116 846 A1 bekannt.

Ähnliche Verfahren sind aus DE 10 2015 120 950 A1 und WO 2017 025 550 A1 bekannt.

Bei herkömmlichen Laserschneidverfahren wird auf dem zu schneidenden Material häufig zunächst eine linienförmige Sollbruchstelle erzeugt, indem mittels eines Kurzpulslaserstrahls in einer Reihe von Brennpunkten entlang einer vorgesehenen Schneidlinie das zu schneidende Material geschwächt, insbesondere perforiert wird. Bei spröden Materialien wie zum Beispiel getempertem Glas kann diese Schwächung oder Perforierung ausreichen, um das Material dann entlang der Schneidlinie trennen zu können. Bei anderen Materialien wie zum Beispiel ungetempertem Glas oder Silizium ist eine zusätzliche thermische Behandlung erforderlich, durch die in dem zu schneidenden Material gezielt mechanische Spannungen im Bereich der Schneidlinie erzeugt werden, die die Trennung des Materials erleichtern. Üblicherweise wird für diese thermische Behandlung die Schneidlinie mit einem kontinuierlichen und nur schwach oder gar nicht fokussierten Laserstrahl abgefahren.

Nachteilig an solchen Verfahren ist, dass die thermische Behandlung nur eine vergleichsweise geringe Arbeitsgeschwindigkeit zulässt, zumal die mögliche Strahlungsintensität in diesem Schritt begrenzt ist, um eine Beschädigung des Materials auszuschließen. Somit ist in dem zweiten Schritt eine vergleichsweise lange Bestrahlungsdauer erforderlich, um eine hinreichende Energiedeposition sicherzustellen. Übliche Laserschneidverfahren werden somit quasi durch die thermische Behandlung ausgebremst und weisen hierdurch nur eine eingeschränkte Effizienz auf.

Der Erfindung liegt die Aufgabe zugrunde, ein besonders effizientes Laserschneidverfahren zum Schneiden von plattenförmigem Material sowie eine zugehörige Laserschneidvorrichtung anzugeben.

Bezüglich des Laserschneidverfahrens wird die Aufgabe erfindungsgemäß gelöst durch die Merkmale des Anspruchs 1. Bezüglich der Laserschneidvorrichtung wird die Aufgabe erfindungsgemäß gelöst durch die Merkmale des Anspruchs 11. Vorteilhafte und teils für sich gesehen erfinderische Ausgestaltungsformen und Weiterentwicklungen der Erfindung sind in den Unteransprüchen und der nachfolgenden Beschreibung dargelegt.

Verfahrensgemäß wird das zu schneidende Material in einem ersten Schritt (auch als "Brennschritt" bezeichnet) durch Bestrahlung mit einem gepulsten ersten Laserstrahl entlang einer vorgesehenen Schneidlinie geschwächt, insbesondere perforiert. In einem zweiten Schritt (auch als "thermische Behandlung" bezeichnet) wird das zu schneidende Material dann durch Bestrahlung mit einem zweiten Laserstrahl im Bereich der Schneidlinie zur Erzeugung einer Materialspannung lokal erhitzt. Erfindungsgemäß wird das zu schneidende Material dabei in dem zweiten Schritt nicht kontinuierlich entlang der gesamten Schneidlinie erhitzt. Vielmehr wird das zu schneidende Material in dem zweiten Schritt nur punktweise, nämlich in einem (einzigen) Punkt oder in mehreren voneinander beabstandeten Punkten, auf der Schneidlinie erhitzt. In einer bevorzugten Ausführung der Erfindung wird das zu schneidende Material hierbei in dem zweiten Schritt in genau zwei Punkten erhitzt, wobei diese zwei Punkte insbesondere in der Nähe der beiden Enden der Schneidlinie angeordnet sind.

Die Erfindung beruht auf der Erkenntnis, dass eine punktweise Erhitzung des zu schneidenden Materials während der thermischen Behandlung ausreicht, um die für eine saubere Trennung des Materials hinreichende Materialspannung zu erzeugen. Da das Material nicht entlang der gesamten Schneidlinie erhitzt werden muss, wird die Arbeitsgeschwindigkeit der thermischen Behandlung wesentlich gesteigert. Insbesondere wird auf diese Weise ermöglicht, die Arbeitsgeschwindigkeiten der beiden Verfahrensschritte etwa aneinander anzugleichen, wodurch eine besonders effiziente Durchführung des Verfahrens ermöglicht wird.

In zweckmäßiger Ausführung umfasst das Verfahren einen dritten Schritt, der sich an die thermische Behandlung anschließt. Bei diesem dritten Schritt handelt es sich um einen mechanischen Trennschritt, in dem das zu schneidende Material durch mechanische Belastung, insbesondere durch Biegen, Scheren und/oder Auseinanderziehen des zu schneidenden Materials, an der Schneidlinie getrennt wird. Der dritte Schritt entfällt bei Materialien, die unter Wirkung der bei der thermischen Behandlung erzeugten Materialspannungen von selbst reißen oder springen.

Der in dem Brennschritt verwendete erste Laserstrahl wird vorzugsweise durch ein Axicon zu einem besselähnlichen Strahl (nachfolgend vereinfachend als "Besselstrahl" bezeichnet) fokussiert. Das zu schneidende Material wird dabei in dem Fokusbereich dieses Besselstrahls angeordnet. Als Axicon wird gemäß üblicher Definition eine Optik in Form einer konisch geschliffenen Linse bezeichnet, die das Licht einer Punktquelle auf eine Linie entlang einer optischen Achse des Axicons abbildet.

Das Axicon ist vorzugsweise derart ausgewählt, dass der Fokusbereich des von ihm erzeugten Besselstrahl eine Länge aufweist, die mindestens der Dicke des zu schneidenden Materials aufweist. Hierdurch wird während des Brennschritts simultan hinreichend Energie über die gesamte Materialstärke deponiert, um das Material in den vorgesehenen Brennpunkten über seine gesamte Stärke zu schwächen. In zweckmäßiger Dimensionierung weist der Fokusbereich des von dem Axicon erzeugten Besselstrahls beispielsweise eine (in Strahlrichtung gemessene) Länge von 2 Millimetern und eine (quer zur Strahlrichtung gemessene) Breite von 2 bis 5 Mikrometern auf.

Der für die thermische Behandlung verwendete der zweite Laserstrahl wird vorzugsweise lediglich schwach fokussiert oder sogar unfokussiert auf das zu schneidende Material emittiert.

Die Lichtwellenlänge des ersten Laserstrahls ist vorzugsweise derart gewählt, dass das zu schneidende Material für das Licht des ersten Laserstrahls transparent ist. Die Energiedeposition, die in dem Brennschritt zu der Schwächung, insbesondere Perforierung des zu schneidenden Materials führt, findet dabei durch nicht-lineare Lichtabsorption des ersten Laserstrahls statt. Die Transparenz des zu schneidenden Materials für den ersten Laserstrahl bewirkt dabei, dass die Energiedeposition gleichmäßig über die gesamte Stärke des zu schneidenden Materials stattfindet.

Die Lichtwellenlänge des zweiten Laserstrahls ist dagegen vorzugsweise derart gewählt, dass das zu schneidende Material für das Licht des zweiten Laserstrahls intransparent oder halbtransparent ist. Hierdurch wird bewirkt, dass durch lineare Absorption der Lichtenergie des zweiten Laserstrahls das zu schneidende Material effektiv erwärmt, aber nicht geschädigt wird. Eine Halbtransparenz des zu schneidenden Materials für das Licht des zweiten Laserstrahls ist bevorzugt, um eine hohe Eindringtiefe des zweiten Laserstrahls in das zu schneidende Material und somit eine möglichst gleichmäßige Erhitzung des letzteren über seine Materialstärke sicherzustellen.

Der erste Laserstrahl wird in zweckmäßiger Ausführung in Pulsen auf das zu schneidende Material emittiert, die eine Pulslänge zwischen 300 Femtosekunden und 30 Picosekunden aufweisen.

Das vorstehend allgemein beschriebene Verfahren wird in einer bevorzugten Anwendung zum Schneiden einer Platte aus Glas, insbesondere aus nicht getempertem Glas, herangezogen. In diesem Fall ist die Lichtwellenlänge des ersten Laserstrahls vorzugsweise auf einen Wert zwischen 0,5 Mikrometer und 2 Mikrometer, insbesondere auf etwa 1 Mikrometer, festgelegt. In einer zweckmäßigen Ausführung des Verfahrens wird zur Erzeugung des ersten Laserstrahls dabei ein modengekoppelter MOPA(Master Oscillator Power Amplifier)-Ultrakurzpulslaser verwendet. Die Lichtwellenlänge des zweiten Laserstrahls ist dagegen vorzugsweise auf einen Wert zwischen 4 Mikrometern und 11,5 Mikrometern, insbesondere auf 5 Mikrometer oder 10 Mikrometer, festgelegt. In einer zweckmäßigen Ausführung des Verfahrens wird hier zur Erzeugung des zweiten Laserstrahls ein kontinuierlicher (d.h. ungepulster) CO₂-Laser verwendet.

In einer weiteren bevorzugten Anwendung wird das erfindungsgemäße Verfahren zum Schneiden einer Platte aus Silizium, insbesondere eines Wafers, herangezogen. In diesem Fall ist die Lichtwellenlänge des ersten Laserstrahls vorzugsweise auf einen Wert zwischen 1,5 Mikrometern und 4 Mikrometern, insbesondere auf 2 Mikrometer, festgelegt. In einer zweckmäßigen Ausführung des Verfahrens wird zur Erzeugung des ersten Laserstrahls dabei ebenfalls ein modengekoppelter MOPA-Ultrakurzpulslaser verwendet. Die Lichtwellenlänge des zweiten Laserstrahls ist dagegen vorzugsweise auf einen Wert zwischen 1 Mikrometern und 11,5 Mikrometer, insbesondere auf 1 Mikrometer oder auf 5 Mikrometer, festgelegt. In einer zweckmäßigen Ausführung des Verfahrens wird hier zur Erzeugung des zweiten Laserstrahls ein kontinuierlicher (d.h. ungepulster) Neodym-YAG- oder CO₂-Laser verwendet.

Die erfindungsgemäße Laserschneidvorrichtung ist allgemein zur Durchführung des vorstehend beschriebenen erfindungsgemäßen Verfahrens, insbesondere in einer der vorstehend beschriebenen Ausführungsvarianten eingerichtet. Die Laserschneidvorrichtung weist dabei insbesondere
- eine Werkstückaufnahme zur Halterung für eine Platte aus dem zu schneidenden Material,
- einen ersten Laser zur Erzeugung des ersten Laserstrahls,
- einen zweiten Laser zur Erzeugung des zweiten Laserstrahls,
- eine Vorschubmechanik zur Bewegung des ersten Laserstrahls und des zweiten Laserstrahls und des zweiten Laserstrahls relativ zu der Werkstückaufnahme, sowie
- eine Steuerung für die Vorschubmechanik und die beiden Laser zur Durchführung des erfindungsgemäßen Verfahrens
auf.

Die Werkstückaufnahme ist vorzugsweise als Auflage ausgebildet, auf die die Platte aus dem zu schneidenden Material aufgelegt wird. Die Auflage ist in zweckmäßiger Ausbildung zum Beispiel durch eine Glasplatte mit einer vorgeordneten nicht-absorbierenden Streuschicht, z.B. aus Polytetrafluorethylen, gebildet.

Die Vorschubmechanik ist vorzugsweise als (z.B. linearmotorisch betriebener oder spindelbetriebener) X-Y-Tisch ausgebildet. Die Vorschubmechanik bewegt dabei vorzugsweise die Werkstückaufnahme (mit der gegebenenfalls daran befestigten Platte aus dem zu schneidenden Material) gegenüber den ortsfest angeordneten Lasern.

In alternativer Ausführung der Laserschneidvorrichtung bewegt die Vorschubmechanik (gemeinsam oder unabhängig voneinander) den ersten Laser und den zweiten Laser relativ zu der ortsfest angeordneten Werkstückaufnahme. Anstelle der gesamten Laser bewegt die Vorschubmechanik in einer weiteren Ausführungsform der Laserschneidvorrichtung (wiederum gemeinsam oder unabhängig voneinander) nur einen jeweiligen Strahlaustrittskopf des ersten und zweiten Lasers, während weitere Komponenten des jeweiligen Lasers, insbesondere der Laserresonator und ein gegebenenfalls vorhandener Verstärker, ortsfest angeordnet sind. Der durch die Vorschubmechanik bewegte Strahlaustrittskopf und die ortsfest angeordneten Komponenten des jeweiligen Lasers sind hierbei über eine flexible Lichtleitfaser, im Falle des ersten Lasers insbesondere eine Hohlfaser, miteinander zur Führung des Laserstrahls gekoppelt.

Ferner umfasst die Erfindung auch Mischformen der vorstehend beschriebenen Ausführungsvarianten, bei welchen (unabhängig voneinander) sowohl die Werkstückaufnahme als auch mindestens einer der beiden Laser oder Strahlaustrittsköpfe durch die Vorschubmechanik bewegt werden und/oder bei welchen einer der beiden Laser komplett durch die Vorschubmechanik bewegt wird, während von dem anderen Laser nur ein Strahlaustrittskopf bewegt wird.

Der erste Laser ist vorzugsweise durch einen modengekoppelten MOPA-Ultrakurzpulslaser gebildet. Dem ersten Laser ist dabei zur Bildung eines dünnen und langgestreckten Fokusbereichs des ersten Laserstrahls ein Axicon nachgeschaltet. Der zweite Laser ist vorzugsweise als kontinuierlicher (d.h. ungepulster) Neodym-YAG- oder CO₂-Laser ausgebildet.

Die Steuerung ist vorzugsweise durch einen Steuerrechner (z.B ein Personal Computer oder Mikrocontroller) gebildet, in dem ein Steuerprogramm zur Ansteuerung der Vorschubmechanik und der beiden Laser implementiert ist. Nach Maßgabe des Steuerprogramms werden die Laser bzw. deren Austrittsköpfe und/oder die Werkstückaufnahme zur Bewegung der Laserstrahlen entlang einer vorgegebenen Schneidlinie verfahren. Der erste Laser wird dabei nach Maßgabe des Steuerprogramms derart gepulst angesteuert, dass er das in der Werkstückaufnahme gehalterte Material in einem ersten Schritt in einer Serie von Brennpunkten entlang der Schneidlinie schwächt, insbesondere perforiert. Der zweite Laser wird nach Maßgabe des Steuerprogramms derart angesteuert, dass er in einem zweiten Schritt das zu schneidende Material zur Erzeugung einer Materialspannung punktweise in einem Punkt oder in mehreren voneinander beabstandeten Punkten entlang der Schneidlinie erhitzt.

Die beiden Schritte werden bevorzugt nacheinander (d.h. zeitlich sequentiell) durchgeführt. Insbesondere wenn der erste Laserstrahl und der zweite Laserstrahl unabhängig voneinander relativ zu der Werkstückaufnahme bewegbar sind, können die beiden Schritte im Rahmen der Erfindung aber auch zeitlich überlappend durchgeführt werden. In diesem Fall wird das zu schneidende Material in dem zweiten Schritt allerdings nur in Bereichen der Schneidlinie erhitzt, in denen das zu schneidende Material zuvor durch den ersten Laserstrahl geschwächt, insbesondere perforiert wurde.

Vorzugsweise umfasst die Laserschneidvorrichtung zusätzlich eine mechanische Trennvorrichtung, um das zu schneidende Material in einem dritten Schritt entlang der durch den Brennschritt und die thermische Behandlung vorbehandelten Schneidlinie mechanisch, insbesondere durch Biegen, Scheren und/oder Auseinanderziehen des zu schneidenden Materials, zu trennen. Die Trennvorrichtung kann im Rahmen der Erfindung durch die Werkstückaufnahme selbst gebildet sein, die in diesem Fall beispielsweise aus zwei gegeneinander kippbaren oder verschiebbaren Teilen gebildet ist. Alternativ ist die optionale Trennvorrichtung durch eine von der Werkstückaufnahme losgelöste, gegebenenfalls auch räumlich entfernte Apparatur gebildet.

Der Begriff "etwa" im Zuge von Wertangaben ist, soweit nichts anderes angegeben ist, so zu verstehen, dass er eine Abweichung von dem angegebenen Wert um bis 10 Prozent (d.h. ± 10%), vorzugsweise um bis zu 5 Prozent (d.h. ± 5%) einschließt.

Nachfolgend werden Ausführungsbeispiele der Erfindung anhand einer Zeichnung näher erläutert. Darin zeigen:
- Fig. 1: in einer grob schematisch vereinfachten perspektivischen Darstellung eine Laserschneidvorrichtung zum Schneiden eines plattenförmigen Materials, hier einer Glasplatte, mit einer Werkstückaufnahme zur Halterung des zu schneidenden Materials, mit einem ersten Laser zur Erzeugung des ersten Laserstrahls, mit einem zweiten Laser zur Erzeugung des zweiten Laserstrahls, mit einer Vorschubmechanik zur Bewegung der Werkstückaufnahme gegenüber dem ersten und zweiten Laserstrahl, sowie mit einer Steuerung für die Vorschubmechanik und die beiden Laser,
- Fig. 2: in schematischer Darstellung einen Strahlengang des ersten Laserstrahls sowie ein in dem Strahlengang positioniertes Axicon,
- Fig. 3: in Draufsicht die Glasplatte nach einem ersten Schritt eines mittels der Laserschneidvorrichtung durchgeführten Verfahrens, in dem die Glasplatte mittels des ersten Laserstrahls in einer Serie von Brennpunkten entlang einer Schneidlinie geschwächt wird,
- Fig. 4: in Darstellung gemäß Fig. 3 die Glasplatte nach einem zweiten Schritt des Verfahrens, in dem die Glasplatte mittels des zweiten Laserstrahls in einem Punkt auf der Schneidlinie zur Erzeugung einer Materialspannung lokal erhitzt wird,
- Fig. 5: in Darstellung gemäß Fig. 3 die Glasplatte nach einem dritten Schritt des Verfahrens, in dem die Glasplatte durch mechanische Belastung, hier Biegung, entlang der Schneidlinie getrennt wird,
- Fig. 6: in Darstellung gemäß Fig. 3 als weiteres Beispiel eines zu schneidenden Materials einen Silizium-Wafer nach dem ersten Schritt des Verfahrens, in dem der Silizium-Wafer mittels des ersten Laserstrahls in einer Serie von Brennpunkten entlang der Schneidlinie geschwächt wird,
- Fig. 7: in Darstellung gemäß Fig. 3 den Silizium-Wafer nach dem zweiten Schritt des Verfahrens, in dem der Silizium-Wafer mittels des zweiten Laserstrahls in zwei gegenüberliegenden Punkten auf der Schneidlinie zur Erzeugung einer Materialspannung lokal erhitzt wird, und
- Fig. 8: in Darstellung gemäß Fig. 3 den Silizium-Wafer nach dem dritten Schritt des Verfahrens, in dem der Silizium-Wafer durch mechanische Belastung, hier Auseinanderziehen, entlang der Schneidlinie getrennt wird.

Einander entsprechende Teile und Strukturen sind in allen Figuren stets mit gleichen Bezugszeichen versehen.

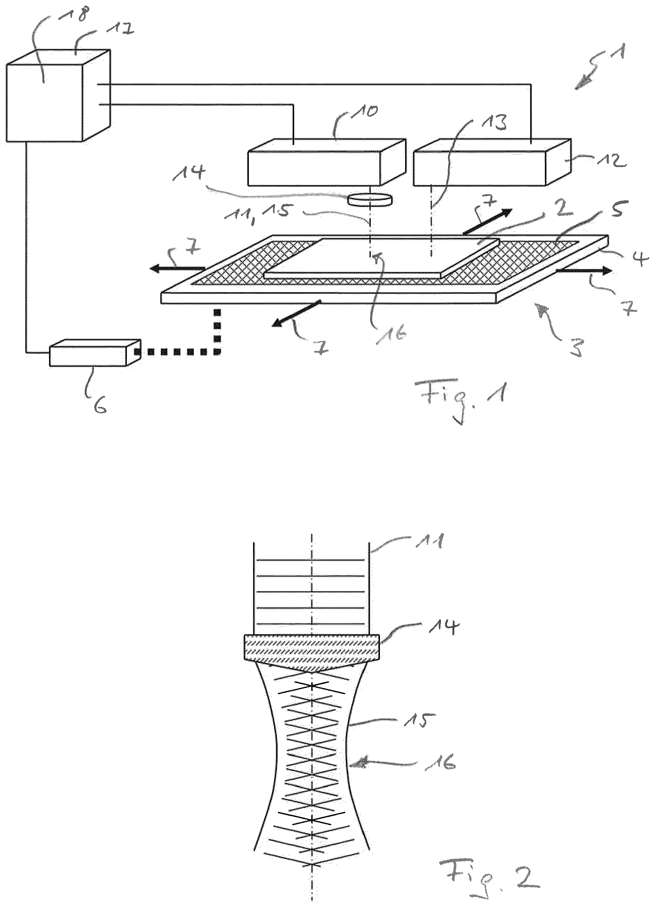

Fig. 1 zeigt in einer grob schematisch vereinfachten perspektivischen Darstellung eine (Laserschneid-)Vorrichtung 1 zum Schneiden eines plattenförmigen Materials, bei dem es sich in dem hier gezeigten Beispiel um eine Glasplatte 2 aus ungetempertem Glas handelt. Die Glasplatte 2 hat beispielsweise eine Stärke von einem Millimeter.

Die Vorrichtung 1 umfasst eine Werkstückaufnahme 3 zur Halterung der Glasplatte 2. Die Werkstückaufnahme 3 ist hierbei durch eine Trägerplatte 4 aus Glas gebildet, auf der werkstückseitig (also auf der Seite, auf der im Betrieb der Vorrichtung 1 die zu schneidende Glasplatte 2 bestimmungsgemäß aufgelegt wird), eine Streuschicht 5 aus Polytetrafluorethylen aufgebracht ist.

Die Trägerplatte 4 hat beispielsweise eine Stärke von 5 Zentimetern, die Streuschicht 5 beispielsweise eine Stärke von 0,2 Millimetern.

Die Werkstückaufnahme 3 ist als X-Y-Tisch ausgebildet, bei dem die Trägerplatte 4 mittels einer (in Fig. 1 nur angedeuteten) Vorschubmechanik 6 in durch Pfeile 7 gekennzeichneten Richtungen innerhalb einer zu der Fläche der Trägerplatte 4 parallelen Ebene verschiebbar ist. Die Vorschubmechanik 6 umfasst beispielsweise zwei Linearmotoren, die mit der Trägerplatte 4 antriebstechnisch gekoppelt sind.

Die Vorrichtung 1 umfasst weiterhin einen ersten Laser 10 zur Erzeugung eines ersten Laserstrahls 11 und einen zweiten Laser 12 zur Erzeugung eines zweiten Laserstrahls 13. Die beiden Laser 10 und 12 sind derart über der Werkstückaufnahme 3 montiert, dass die von ihnen jeweils emittierten Laserstrahlen 11 bzw. 13 jeweils senkrecht zu der Trägerplatte 4 auf deren werkstückseitige Fläche ausgerichtet sind. Die Laser 10 und 12 sind ortsfest gehaltert, so dass bei einer Verstellung der Trägerplatte 4 durch die Vorschubmechanik 6 die auf der Trägerplatte 4 gelagerte Glasplatte 2 relativ zu den Laserstrahlen 11 und 13 bewegt wird.

Bei dem ersten Laser 10 handelt es sich um einen modengekoppelten MOPA-Ultrakurzpulslaser, der im Beispiel gemäß Fig. 1 den ersten Laserstrahl 11 in Form von Laserpulsen erzeugt. Der erste Laserstrahl 11 hat dabei eine Lichtwellenlänge von etwa einem Mikrometer, konkret beispielsweise 1064 Nanometern. Er liegt also im nah-infraroten Bereich des elektromagnetischen Spektrums, so dass die zu schneidende Glasplatte 2 für den ersten Laserstrahl 11 transparent ist.

Dem ersten Laser 10 ist als Optik ein Axicon 14 vorgeschaltet, das den ersten Laserstrahl 11 zu einem Besselstrahl 15 mit einem dünnen und langestreckten Fokusbereich 16 fokussiert. In beispielhafter Dimensionierung erzeugt das Axicon 14 den Fokusbereich 16 des ersten Laserstrahls 11 mit einer (quer zur Strahlrichtung gemessenen) Breite von 2 bis 5 Mikrometern und einer (in Strahlrichtung gemessenen) Länge von etwa 2 Millimetern. Das Axicon 14, der durch dieses erzeugte Besselstrahl 15 und dessen Fokusbereich 16 sind in Fig. 2 grob schematisch vereinfacht dargestellt. Im Rahmen der Vorrichtung 1 ist das Axicon 14 bezüglich der Werkstückaufnahme 3 derart justiert, dass der Fokusbereich 16 des Besselstrahls 15 die auf der Trägerplatte 4 gelagerte Glasplatte 2 über ihre gesamte Stärke durchsetzt.

Der zweite Laser 12 ist in der Ausführungsform gemäß Fig. 1 ein CO₂-Laser, der den zweiten Laserstrahl 13 als kontinuierlichen (d.h. ungepulsten) Laserstrahl mit Lichtwellen von etwa 10 Mikrometern, konkret beispielsweise 10,6 Mikrometern, und einer Leistung/Intensität von z.B. 100 Watt erzeugt. Das Licht des zweiten Laserstrahls 13 liegt also im mittleren Infrarot-Bereich des elektromagnetischen Spektrums, so dass die zu schneidende Glasplatte 2 für den zweiten Laserstrahl 13 je nach Glastyp halbtransparent oder sogar intransparent ist. Der zweite Laserstrahl 13 wird unfokussiert auf die Trägerplatte 4 und die darauf gelagerte Glasplatte 2 emittiert.

Die Vorrichtung 1 umfasst schließlich als Steuerung einen Steuerrechner 17. In dem Steuerrechner 17 ist ein Steuerprogramm 18 implementiert, nach Maßgabe dessen der Steuerrechner 17 im Betrieb der Vorrichtung 1 die Vorschubmechanik 6 und die beiden Laser 10 und 12 ansteuert.

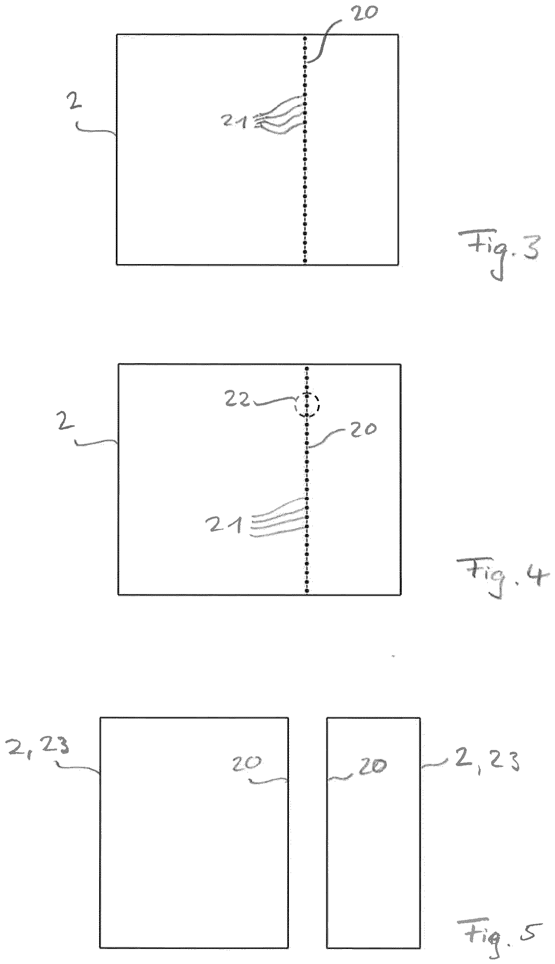

Bestimmungsgemäß wird mittels der Vorrichtung 1 ein Laserschneidverfahren durchgeführt, das in der Anwendung auf das Schneiden von ungetempertem Glas drei Schritte aufweist. Der Zustand der Glasplatte 2 nach dem ersten bzw. zweiten bzw. dritten Schritt ist dabei in den Fig. 3 bis 5 dargestellt.

In einem ersten Schritt dieses Verfahrens wird der erste Laserstrahl 11 entlang einer vorgesehenen Schneidlinie 20 (Fig. 3) über die zu schneidende Glasplatte 2 geführt, indem die Trägerplatte - gesteuert durch das in dem Steuerrechner 17 ablaufende Steuerprogramm 18 und angetrieben durch die Vorschubmechanik 6 - relativ zu dem ersten Laser 10 bewegt wird. Durch den hochfokussierten, gepulsten Laserstrahl 11 werden dabei in der Glasplatte 2 entlang der Schneidlinie 20 eine Serie von Brennpunkten 21 (Fig. 3) erzeugt, in denen das Material der Glasplatte 2 durch nicht-lineare Absorption der Pulsenergie geschwächt oder zerstört wird. Infolge der Transparenz der Glasplatte 2 für das Licht des ersten Laserstrahls 11 und der langen axialen Ausdehnung des Fokusbereichs 16 erstreckt sich jeder Brennpunkt 21 über die gesamte Stärke der Glasplatte 2 bei einer Breite von 2 bis 5 Mikrometern. Die Brennpunkte 21 werden auf der Schneidlinie 20 beispielsweise mit einem Abstand von 1 bis 10 Mikrometern, insbesondere 4 bis 5 Mikrometern, erzeugt. Der aus der Glasplatte 2 austretende Laserstrahl 11 wird in der Streuschicht 5 absorptionsfrei gestreut, so dass die Energiedichte im weiteren Verlauf seines Strahlengangs herabgesetzt wird. Hierdurch transmittiert der erste Laserstrahl 11 die Trägerplatte 4 ohne diese zu beschädigen.

In dem folgenden zweiten Schritt des Verfahrens wird die zu schneidende Glasplatte 2 mit der Werkstückaufnahme 3 derart bewegt, dass der zweite Laserstrahl 13 in einem vorgegebenen Punkt 22 (Fig. 4) auf der Schneidlinie 20 auftrifft. Das Material der Glasplatte 2 wird nun in dem Punkt 22 lokal erhitzt, indem die Glasplatte 2 für eine Dauer von beispielsweise 5 bis 2000 Millisekunden mit dem zweiten Laserstrahl 13 bestrahlt wird. Durch diese thermische Behandlung wird in der Glasplatte 2 eine Materialspannung erzeugt, die die anschließende Trennung der Glasplatte 2 an der Schneidlinie 20 unterstützt.

Hierzu wird in die Glasplatte 2 in dem dritten Schritt mechanisch belastet, so dass sie an der durch die vorausgegangenen Schritte vorbehandelten Schneidlinie 20 springt. Als Resultat dieser mechanischen Belastung liegt die Glasplatte 2 nach dem dritten Schritt gemäß Fig. 5 in zwei an der Schneidlinie 20 getrennten Stücken 23 vor. Die mechanische Belastung erfolgt in dem hier dargestellten Ausführungsbeispiel durch Biegung der Glasplatte 2 mittels einer nicht explizit dargestellten Trennvorrichtung, die vorzugsweise als integrale und automatisch durch den Steuerrechner 17 betätigte Mechanik ausgebildet ist. Bei der Trennvorrichtung handelt es sich in diesem Fall beispielsweise um eine Hebemechanik, die die Glasplatte 2 lokal anhebt und auf diese Weise eine Biegung der Glasplatte 2 unter Wirkung ihres Eigengewichts verursacht. Alternativ kann auch eine von der Vorrichtung 1 losgelöste Trennvorrichtung zum Biegen der Glasplatte 2 zum Einsatz kommen. Wiederum alternativ kann die Glasplatte 2auch manuell gebogen oder in sonstiger Weise belastet werden.

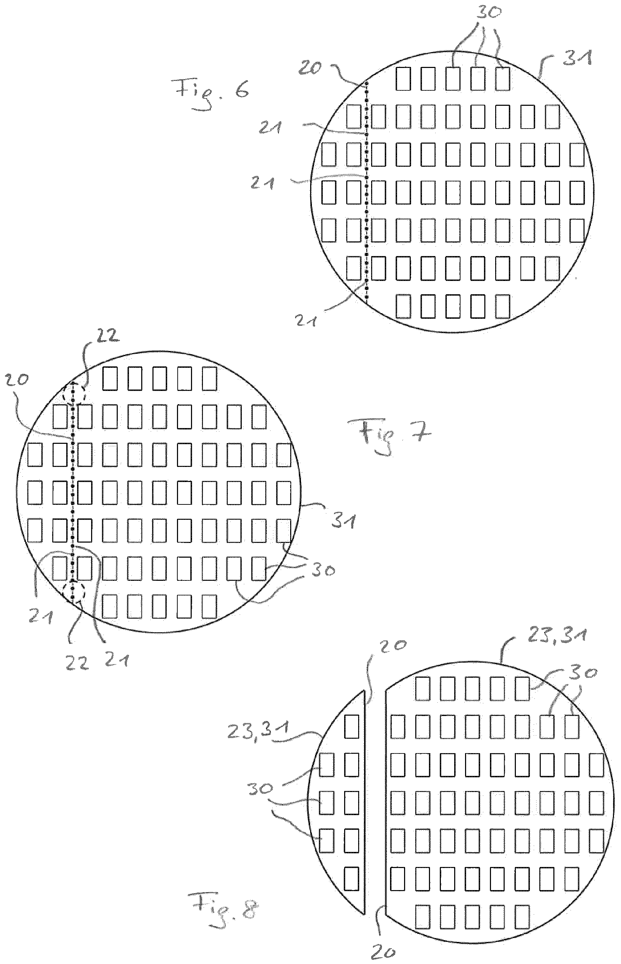

In einer anhand der Fig. 6 bis 8 veranschaulichten weiteren Anwendung wird das Laserschneidverfahren zum Vereinzeln von Chips 30 (beispielsweise integrierten elektronischen Schaltkreisen) aus einem Wafer 31 aus Silizium eingesetzt. Analog zu der Abfolge der Fig. 3 bis 5 zeigen die Fig. 6 bis 9 den Wafer 31 nach dem ersten bzw. zweiten bzw. dritten Schritt des Verfahrens. Die Verfahrensschritte werden solange unter Zugrundlegung verschiedener Schneidkanten 20 wiederholt, bis alle Chips 30 vereinzelt vorliegen.

Die anhand der Fig. 6 bis 8 beschriebene Variante des Laserschneidverfahrens wird mit einer Ausführungsform der Vorrichtung 1 durchgeführt, die - bis auf die nachfolgend beschriebenen Unterschiede - der Vorrichtung 1 gemäß Fig. 1 entspricht. Im Unterschied zu der letztgenannten Ausführungsform sind aber zum Schneiden des Wafers 31 der erste Laser 10 und der zweite Laser 12 derart ausgestaltet, dass der erste Laserstrahl 11 mit einer Lichtwellenlänge von 2 Mikrometern, und der zweite Laserstrahl 13 mit einer Lichtwellenlänge von einem Mikrometer erzeugt werden. Durch diese Wahl der Lichtwellenlängen wird sichergestellt, dass der Wafer 31 für das Licht des ersten Laserstrahls 11 transparent und für das Licht des zweiten Laserstrahls 13 halbtransparent oder intransparent ist. Anstelle eines CO₂-Lasers kann hier auch ein Neodym-YAG-Laser als zweiter Laser 12 eingesetzt werden.

Ein weiterer Unterschied zu der Verfahrensvariante gemäß Fig. 3 bis 5 besteht darin, dass in dem zweiten Schritt gemäß Fig. 7 der Wafer 31 in zwei an entgegengesetzten Enden der Schneidlinie 20 angeordneten Punkten 22 erhitzt wird.

Die Trennung des Wafers 31 gemäß Fig. 8 erfolgt schließlich, indem die durch die Schneidlinie 20 abgegrenzten Stücke 23 des Wafers 31 auseinandergezogen werden. Der Wafer 31 wird hierzu vorzugsweise flächig auf einer nicht dargestellten flexiblen Trägerfolie aufgeklebt, die zur Trennung der Stücke 23 gedehnt wird.

Alternativ zu dem in den Fig. 6 bis 8 dargestellten Verfahrensablauf werden zunächst alle zur Vereinzelung der Chips 30 erforderlichen Schneidlinien 20 durch wiederholte aufeinanderfolgende Ausführung des ersten und zweiten Schritts vorbehandelt, ohne den Wafer 31 zunächst zu zerteilen. Anschließend werden durch einmalige Ausführung des dritten Schritts, nämlich durch einmalige Dehnung der Trägerfolie, alle Chips 31 des Wafers 30 gleichzeitig voneinander getrennt.

Die Erfindung wird an den vorstehenden Ausführungsbeispielen besonders deutlich. Sie ist gleichwohl auf diese Ausführungsbeispiele aber nicht beschränkt. Vielmehr können zahlreiche weitere Ausführungsformen der Erfindung aus den Ansprüchen und der vorstehenden Beschreibung im Rahmen des durch die Ansprüche definierten Schutzumfanges abgeleitet werden. Insbesondere können Einzelmerkmale der vorstehend beschriebenen Ausführungsbeispiele auch in anderer Weise kombiniert werden, ohne von dem durch die Ansprüche definierten Schutzumfang der Erfindung abzuweichen.

### Bezugszeichenliste

- 1: (Laserschneid-)Vorrichtung
- 2: Glasplatte
- 3: Werkstückaufnahme
- 4: Trägerplatte
- 5: Streuschicht
- 6: Vorschubmechanik
- 7: Pfeil
- 10: (erster) Laser
- 11: (erster) Laserstrahl
- 12: (zweiter) Laser
- 13: (zweiter) Laserstrahl
- 14: Axicon
- 15: Besselstrahl
- 16: Fokusbereich
- 17: Steuerrechner
- 18: Steuerprogramm
- 20: Schneidlinie
- 21: Brennpunkt
- 22: Punkt
- 23: Stück
- 30: Chip
- 31: Wafer

## Patentansprüche

1. Laserschneidverfahren zum Schneiden von plattenförmigem Material,
- bei welchem in einem ersten Schritt das zu schneidende Material durch Bestrahlung mit einem gepulsten ersten Laserstrahl (11) entlang einer vorgesehenen Schneidlinie (20) geschwächt, insbesondere perforiert, wird und
- bei welchem in einem zweiten Schritt durch Bestrahlung mit einem zweiten Laserstrahl (13) das zu schneidende Material im Bereich der Schneidlinie (20) zur Erzeugung einer Materialspannung lokal erhitzt wird,
**dadurch gekennzeichnet**
**dass** das zu schneidende Material in dem zweiten Schritt nur in einem Punkt (22) oder in mehreren voneinander beabstandeten Punkten (22) auf der Schneidlinie (20) erhitzt wird.

2. Verfahren nach Anspruch 1,
wobei das zu schneidende Material in dem zweiten Schritt nur in genau zwei voneinander beabstandeten Punkten (22) auf der Schneidlinie (20) erhitzt wird.

3. Verfahren nach Anspruch 1 oder 2,
wobei in einem dritten Schritt das zu schneidende Material durch mechanische Belastung, insbesondere durch Biegen, Scheren und/oder Auseinanderziehen des zu schneidenden Materials an der Schneidlinie (20) getrennt wird.

4. Verfahren nach einem der Ansprüche 1 bis 3,
wobei der erste Laserstrahl (11) durch ein Axicon (14) zu einem Besselstrahl (15) fokussiert wird, in dessen Fokusbereich (16) das zu schneidende Material angeordnet wird.

5. Verfahren nach einem der Ansprüche 1 bis 4,
wobei der zweite Laserstrahl (13) schwach fokussiert oder unfokussiert auf das zu schneidende Material emittiert wird.

6. Verfahren nach einem der Ansprüche 1 bis 5,
wobei das zu schneidende Material für den ersten Laserstrahl (11) transparent ist.

7. Verfahren nach einem der Ansprüche 1 bis 6,
wobei das zu schneidende Material für den zweiten Laserstrahl (13) intransparent oder halbtransparent ist.

8. Verfahren nach einem der Ansprüche 1 bis 7,
wobei der erste Laserstrahl (11) in Pulsen mit einer Pulslänge zwischen 300 Femtosekunden und 30 Picosekunden auf das zu schneidende Material emittiert wird.

9. Verfahren nach einem der Ansprüche 1 bis 8,
wobei als zu schneidendes Material eine Glasplatte (2), insbesondere aus nicht getempertem Glas, herangezogen wird, wobei der erste Laserstrahl (11) eine Wellenlänge von etwa 1 Mikrometer aufweist, und wobei der zweite Laserstrahl (13) eine Wellenlänge von etwa 10 Mikrometern aufweist.

10. Verfahren nach einem der Ansprüche 1 bis 9,
wobei als zu schneidendes Material eine Platte (31) aus Silizium herangezogen wird, wobei der erste Laserstrahl (11) eine Wellenlänge von etwa 2 Mikrometern aufweist, und wobei der zweite Laserstrahl (13) eine Wellenlänge von etwa 1 Mikrometer aufweist.

11. Laserschneidvorrichtung (1) zum Schneiden von plattenförmigem Material,
• mit einer Werkstückaufnahme (3) zur Halterung für eine Platte (2) aus dem zu schneidenden Material,
• mit einem ersten Laser (10) zur Erzeugung des ersten Laserstrahls (11),
• mit einem zweiten Laser (12) zur Erzeugung des zweiten Laserstrahls (13),
• mit einer Vorschubmechanik (6) zur Bewegung des ersten Laserstrahls (11) und des zweiten Laserstrahls (13) relativ zu der Werkstückaufnahme (6), sowie
• mit einer Steuerung (17,18) für die Vorschubmechanik (6) und die beiden Laser (10,12), wobei die Steuerung (17,18) zur Durchführung des Verfahrens nach einem der Ansprüche 1 bis 10 eingerichtet ist.

## Claims

1. Laser cutting method for cutting plate-shaped material,
- in which, in a first step, the material to be cut is weakened, in particular perforated, by irradiation with a pulsed first laser beam (11) along an intended cutting line (20), and
- in which, in a second step, the material to be cut is locally heated in the region of the cutting line (20) by irradiation with a second laser beam (13) to generate a material stress,
**characterized in**
**that** the material to be cut is heated in the second step only at one point (22) or at several points (22) spaced apart from one another on the cutting line (20).

2. Method according to claim 1,
wherein the material to be cut is heated in the second step only in exactly two spaced points (22) on the cutting line (20).

3. Method according to claim 1 or 2,
wherein, in a third step, the material to be cut is separated by mechanical stress, in particular by bending, shearing and/or pulling apart the material to be cut at the cutting line (20).

4. Method according to one of claims 1 to 3,
wherein the first laser beam (11) is focused by an axicon (14) into a Bessel beam (15), in the focal area (16) of which the material to be cut is arranged.

5. Method according to one of claims 1 to 4,
wherein the second laser beam (13) is emitted weakly focused or unfocused onto the material to be cut.

6. Method according to one of claims 1 to 5,
wherein the material to be cut is transparent for the first laser beam (11).

7. Method according to one of claims 1 to 6,
wherein the material to be cut is intransparent or semi-transparent for the second laser beam (13).

8. Method according to one of claims 1 to 7,
wherein the first laser beam (11) is emitted in pulses with a pulse length between 300 femtoseconds and 30 picoseconds onto the material to be cut.

9. Method according to one of claims 1 to 8,
wherein a glass plate (2), in particular of non-annealed glass, is used as the material to be cut, wherein the first laser beam (11) has a wavelength of about 1 micrometer, and wherein the second laser beam (13) has a wavelength of about 10 micrometers.

10. Method according to one of claims 1 to 9,
wherein a plate (31) of silicon is used as the material to be cut, wherein the first laser beam (11) has a wavelength of about 2 micrometers, and wherein the second laser beam (13) has a wavelength of about 1 micrometer.

11. Laser cutting device (1) for cutting plate-shaped material,
• with a workpiece holder (3) for holding a plate (2) of the material to be cut,
• with a first laser (10) for generating the first laser beam (11),
• with a second laser (12) for generating the second laser beam (13),
• with a feed mechanism (6) for moving the first laser beam (11) and the second laser beam (13) relative to the workpiece holder (6), and
• with a controller (17, 18) for the feed mechanism (6) and the two lasers (10, 12), the controller (17, 18) being configured to carry out the method according to one of claims 1 to 10.

## Revendications

1. Procédé de découpe par laser pour découper des matériaux en forme de plaques
- dans lequel, dans une première étape, le matériau à découper est affaibli, en particulier perforé, par irradiation avec un premier faisceau laser pulsé (11) le long d'une ligne de découpe (20) prévue et
- dans lequel, dans une deuxième étape, le matériau à découper est chauffé localement dans la zone de la ligne de découpe (20) par irradiation avec un deuxième faisceau laser (13) pour produire une tension de matériau, **caractérisé en ce**
**que** le matériau à découper est chauffé dans la deuxième étape seulement en un point (22) ou en plusieurs points (22) espacés les uns des autres sur la ligne de découpe (20).

2. Procédé selon la revendication 1,
dans lequel le matériau à découper n'est chauffé dans la deuxième étape qu'en exactement deux points (22) espacés l'un de l'autre sur la ligne de découpe (20).

3. Procédé selon la revendication 1 ou 2,
dans lequel, dans une troisième étape, le matériau à découper est séparé par une sollicitation mécanique, en particulier par pliage, cisaillement et/ou retrait du matériau à découper sur la ligne de découpe (20).

4. Procédé selon l'une des revendications 1 à 3,
dans lequel le premier faisceau laser (11) est focalisé par un axicon (14) en un faisceau de Bessel (15), le matériau à découper étant disposé dans la zone focale (16) dudit faisceau de Bessel (15).

5. Procédé selon l'une des revendications 1 à 4,
dans lequel le deuxième faisceau laser (13) est émis de manière faiblement focalisée ou non focalisée sur le matériau à découper.

6. Procédé selon l'une des revendications 1 à 5,
dans lequel le matériau à découper est transparent pour le premier faisceau laser (11).

7. Procédé selon l'une des revendications 1 à 6,
dans lequel le matériau à découper est intransparent ou semi-transparent pour le deuxième faisceau laser (13).

8. Procédé selon l'une des revendications 1 à 7,
dans lequel le premier faisceau laser (11) est émis en impulsions d'une longueur d'impulsion comprise entre 300 femtosecondes et 30 picosecondes sur le matériau à découper.

9. Procédé selon l'une des revendications 1 à 8,
dans lequel une plaque de verre (2), en particulier en verre non trempé, est utilisée comme matériau à découper, dans lequel le premier faisceau laser (11) a une longueur d'onde d'environ 1 micromètre, et dans lequel le deuxième faisceau laser (13) a une longueur d'onde d'environ 10 micromètres.

10. Procédé selon l'une des revendications 1 à 9,
dans lequel une plaque (31) en silicium est utilisée comme matériau à découper, dans lequel le premier faisceau laser (11) a une longueur d'onde d'environ 2 micromètres et dans lequel le deuxième faisceau laser (13) a une longueur d'onde d'environ 1 micromètre.

11. Dispositif de découpe par laser (1) pour la découpe de matériaux en forme de plaques,
• avec un logement de pièce (3) pour le maintien d'une plaque (2) du matériau à découper,
• avec un premier laser (10) pour générer le premier faisceau laser (11),
• avec un deuxième laser (12) pour générer le deuxième faisceau laser (13),
• avec un mécanisme d'avance (6) pour déplacer le premier faisceau laser (11) et le deuxième faisceau laser (13) par rapport au logement de pièce (6), et
• avec une commande (17, 18) pour le mécanisme d'avance (6) et les deux lasers (10, 12), la commande (17, 18) étant conçue pour la mise en oeuvre du procédé selon l'une des revendications 1 à 10.
